Europäisches Patentamt

European Patent Office

Office européen des brevets

(19)

(11) Publication number: **0 419 100 A1**

# EUROPEAN PATENT APPLICATION

(21) Application number: 90309837.4

(22) Date of filing: 07.09.90

(51) Int. Cl.⁵: **G01J 5/04, A61B 1/22**

(30) Priority: **19.09.89 US 409216**

(43) Date of publication of application:
**27.03.91 Bulletin 91/13**

(84) Designated Contracting States:
**DE FR GB**

(71) Applicant: **THERMOSCAN INC.**
**3338 Fosca**
**Carlsbad, California 92009(US)**

(72) Inventor: **Fraden, Jacob**
**72 Hampton Road**
**Hamden, CT 06518(US)**
Inventor: **Mackay, Spencer L.**
**28765 Pisces Street**
**Agoura Hills, California 91301(US)**
Inventor: **Crawford, Alan**
**2615B West Victory Boulevard**
**Burbank, California 92115(US)**
Inventor: **Doyle, Mark**
**4733 Constance Drive**
**San Diego, California 92115(US)**
Inventor: **Lackey, Robert P.**
**3338 Fosca**
**Carlsbad, California 92009(US)**

(74) Representative: **Coxon, Philip et al**
**Eric Potter & Clarkson St. Mary's Court St.**
**Mary's Gate**
**Nottingham NG1 1LE(GB)**

(54) **Speculum cover.**

(57) A probe cover (10) for an infrared thermometer (14) has a sheath (16) which fits over the thermometer probe (12) and a base (18), which is engageable with the probe (12), is attached to the periphery of the sheath to hold the sheath (16) over the probe (12). The sheath (16) is made of a thin infrared transparent film and is formed with a window (20) which causes minimal attenuation of infrared emission received by the thermometer.

Fig. 1

The present invention relates to covers for the probes and probe tips of infrared thermometers and, more specifically, pertains to speculum covers and their method of manufacture. More particularly, the present invention pertains to sanitary covers for probes or specula of medical instruments. The present invention is particularly, but not exclusively, useful as a probe cover for a thermometer which measures the core temperature of the human body by detecting and analyzing infrared emission from a body surface of a patient, such as in the external ear canal of a patient.

It is well known that an accurate reading of the temperature of a human body is helpful, if not essential, for the diagnosis and treatment of numerous ailments. Indeed, several types of thermometers have been developed for these purposes. For instance, the so-called infrared thermometers are increasingly being used in addition to, or in place of, the more conventional contact thermometer. While all types of thermometers can be efficacious for their intended use, the focus here is on infrared thermometers, examples of which are disclosed in US Patent No 4,787,840. Regardless of the type of thermometer, however, for all thermometers it is necessary that there be a sanitary contact between the thermometer and the body. This means that the thermometer must either be sterilizable prior to a subsequent use, that it be used only once and then discarded, or that the thermometer be somehow protected from contact with the body. For thermometers, such as infrared thermometers which cannot be effectively sterilized or are too expensive to be disposable, the only practical way to insure a sanitary use of the thermometer is to provide a disposable cover for that part of the thermometer which comes into contact with the body.

In order to determine the temperature of a human body, infrared thermometers typically have a probe which is inserted into the external ear canal of the patient or otherwise brought into contact with a body surface of the patient. With the probe so placed, infrared emissions from within the ear canal are received through the probe and detected by the thermometer for conversion into temperature readings. Thus, it is the probe of an infrared thermometer which contacts the body of the patient and which needs to be protected from contamination. Not surprisingly, several devices have been suggested which accomplish this purpose. For example, US Patent No 3,949,740 discloses a disposable plastic speculum for use on an infrared sensing thermometer and US Patent No 4,662,360 discloses a sanitary protective cover for the ear canal probe of a tympanic thermometer. As exemplified by the above-cited references, infrared thermometer probe covers have heretofore typically included a rigid or semi-rigid structure which is intended to perform a function in addition to partially covering the probe. In the case of US Patent No 3,949,740 a rigid structure is provided for the probe cover which serves as a speculum that helps render the ear canal accessible to the probe. In the case of US Patent No. 4,662,360 the two-part probe cover includes a relatively rigid tubular body portion which is sufficiently strong to mount and support an infrared window on the thermometer probe.

It is an object of this invention to provide an improved cover for the probe and probe tip of an infrared thermometer.

According to one aspect of this invention there is provided a cover for the probe and probe tip of an infrared thermometer, said cover comprising a base engageable with said probe and a sheath attached to said base and adapted to cover at least a portion of said probe wherein said sheath defines a substantially infrared transparent window arranged to be held over said probe tip when said base is engaged with said probe.

According to another aspect of this invention there is provided a cover for the speculum of an infrared thermometer which comprises:
a base engageable with said speculum; and
a unitary hollow sheath having a closed end and an open end, said closed end being a substantially infrared transparent window and said open end being defined by the periphery of said sheath, said periphery attached to said base to distance said window therefrom for covering said speculum with said sheath when said base is engaged to said speculum.

Preferably, said cover comprises a wall interconnecting said window with said periphery of said sheath.

According to another aspect of this invention there is provided a cover for the probe and probe tip of an infrared thermometer which comprises:
a base dimensioned for surrounding interference fit with said probe; and
an infrared transparent film formed with a window and a peripheral flange and having an integrally continuous wall connecting said window with said flange, said flange attached to said base for holding said window over said probe tip and covering at lease a portion of said probe when said base is fitted on said probe.

According to another aspect of this invention there is provided a cover for the probe and probe tip of an infrared thermometer which comprises:
a base dimensioned for a surrounding interference fit with said probe; and
an elongated infrared transparent film having substantially parallel edges, said edges being attached to said base to form a sling for creating an infrared transparent window over said probe tip and covering at least a portion of said probe when said base is fitted on said probe.

According to another aspect of this invention there is provided a method for manufacturing a probe cover for an infrared thermometer which comprises the steps of:

centering a thin infrared transparent film over the opening of a frustum-shaped cavity;

gripping a central circular portion of said film between a forming punch and a spring-loaded seat to establish a window therebetween;

pushing said punch into said cavity against the action of said seat to conform said film with said cavity and establish a sheath having a wall integral with said window and extending therefrom: and

attaching a base to the periphery of said sheath with said base being substantially parallel to said window.

The present invention recognizes that, unlike prior art devices, the probe cover for an infrared thermometer need not function as a speculum in addition to its protective function. Further, the present invention recognizes that the functional part of a probe cover need not be either rigid or semi-rigid. Instead, as recognized by the present invention, the probe cover of an infrared thermometer can be simply a cover so long as this cover includes the infrared (IR) transparent window that must be part of any effective probe cover. Still further, the present invention recognizes that the IR transparent window of a probe cover can be an integral part of a continuously formed unitary barrier which can be positioned between the thermometer probe and the part of the body which comes into contact with the probe.

Accordingly, the present invention provides a cover for the probe speculum of an infrared thermometer which establishes an effective sanitary barrier between the probe and the part of the body that comes in contact with the probe. The present invention may also provide a speculum cover which may operatively position an infrared transparent window on the probe of an infrared thermometer. Further the present invention provides a probe cover which may be easily placed on the probe of an infrared thermometer and easily removed from the probe. Still further, the present invention may provide a probe cover which effectively establishes a continuous integrally formed unitary barrier between the probe and the part of the body which comes into contact with the probe. Additionally, the present invention may provide a method for manufacturing a probe cover which is cost-effective and relatively easy to implement.

The preferred embodiment of a probe cover for an infrared sensitive tympanic thermometer comprises a frustum-shaped sheath having an open end and a closed end. The sheath may be made from a single unitary piece of substantially infrared transparent film and the closed end of the sheath may be a portion of this film which establishes an infrared window. The open end of the sheath may be defined by its periphery, ie the edge of the piece of film.

A ring-shaped base may be ultrasonically welded, bonded, or otherwise attached to the periphery of the sheath and may be dimensioned to establish an interference fit with the thermometer probe when the cover is placed over the probe. Importantly, engagement of the base of the probe cover onto the probe of the thermometer positions the infrared window across the path along which infrared emissions which can be from inside the ear canal can be received by the thermometer. Preferably, the base ring is a substantially rigid plastic, and the film which forms the sheath may be a thin polymer film, such as a polyethylene or polypropylene, that is approximately in the order of one thousandth of an inch (0.001 in.) thick.

The manufacture of the preferred embodiment of the probe cover of the present invention may be accomplished by placing a piece of infrared transparent film across the opening of an inwardly-tapered frustum-shaped cavity. This piece of film may be cut (eg circular-shaped) and may be centered over the cavity with a portion overlapping and extending beyond the opening of the cavity. A forming punch and a spring-loaded seat may engage the center of the film on its opposite sides to grip the film and hold it therebetween to establish the infrared window. The forming punch, which can be dimensioned for mating engagement with the frustum-shaped cavity, may then be driven into the cavity to press portions of the film extending radially from the window between the forming punch and the walls of the cavity. The result is a hollow frustum-shaped sheath which has a closed end defined by the infrared window and an integral sheath wall that extends from the window toward the open end of the sheath which is defined by the periphery of the sheath. A rigid plastic base ring may then be bonded or ultrasonically welded to the periphery of the sheath to complete the manufacture of the probe cover.

In an alternative embodiment of the present invention, the frustum-shaped sheath is replaced by an elongated flexible film strip which is formed with a pair of substantially parallel edges. These edges may be opposite from each other and may be respectively attached to oppositely disposed sides of a base member. In this combination, the film strip may hang as a sling from the base member and may be stretched over the end of the probe tip of an IR thermometer when the base member is engaged to the probe of the thermometer. As so positioned, the film strip may create an IR window over the probe tip and may establish a protective covering between the probe and the part of the body which comes into contact with the probe. In the specific case where the probe is inserted into the external ear canal of a patient, insertion forces on the film strip fold the film strip onto the probe to establish a sanitary protective barrier between the probe tip and the external ear canal.

Reference is now made to the accompanying drawings in which:-

Figure 1 is a perspective view of an infrared thermometer with the probe cover of the present invention engaged to cover the probe of the thermometer;

Figure 2 is a cross-sectional view of the probe cover engaged with a portion of the thermometer probe as seen along the line 2-2 in Figure 1;

Figure 3A is an elevational view of a probe cover forming tool with its forming punch in a withdrawn position and with portions of the tool shown in a cross section for clarity;

Figure 3B is an elevational view of the probe cover forming tool as shown in Figure 3A with the forming punch in an inserted position;

Figure 4 is an elevational view of a plurality of nested probe covers;

Figure 5 is an exploded view of an alternate embodiment of a probe cover;

Figure 6 is a perspective view of the alternate embodiment shown in Figure 5 when assembled;

Figure 7 is a cross-sectional view of the alternate embodiment as seen along the line 7-7 in Figure 6; and

Figure 8 is a perspective view of the alternate embodiment of the probe cover engaged with the probe of an IR thermometer.

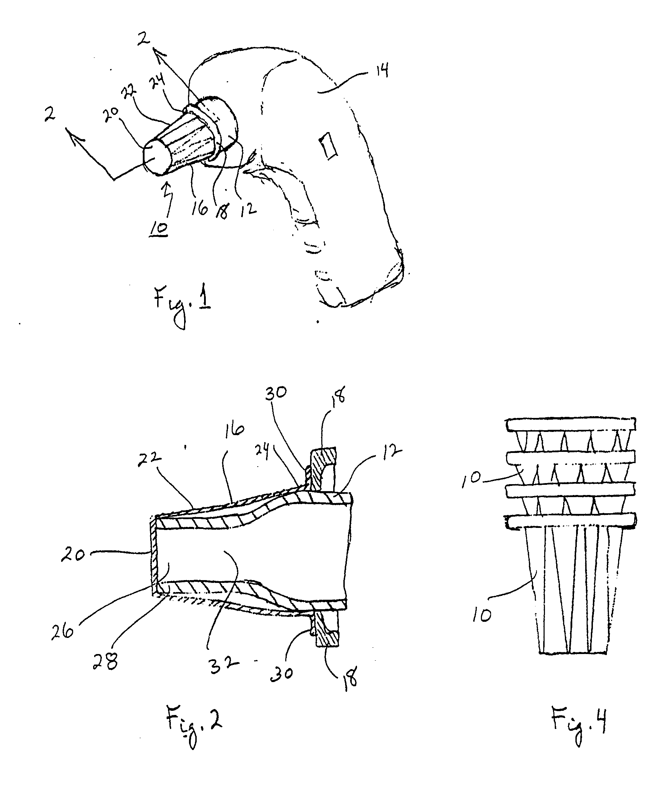

Referring initially to Figure 1, a probe cover according to the present invention is generally designated 10 and is shown positioned over the probe 12 of an infrared thermometer 14. As shown, cover 10 is a two-part device which includes a hollow flexible sheath 16 that is attached to a substantially rigid base ring 18. More specifically, the hollow sheath 16 is formed from a single piece of infrared transparent material to have a flat, generally circular window 20 and a wall 22 which is tapered between the window 20 and the periphery 24 of sheath 16. When combined, the periphery 24 of the sheath 16 is attached to ring 18 to create a generally hollow frustum-shaped cover 10 having a closed end defined by window 20 and an open end defined by the periphery 24 of sheath 16 at its attachment to base ring 18.

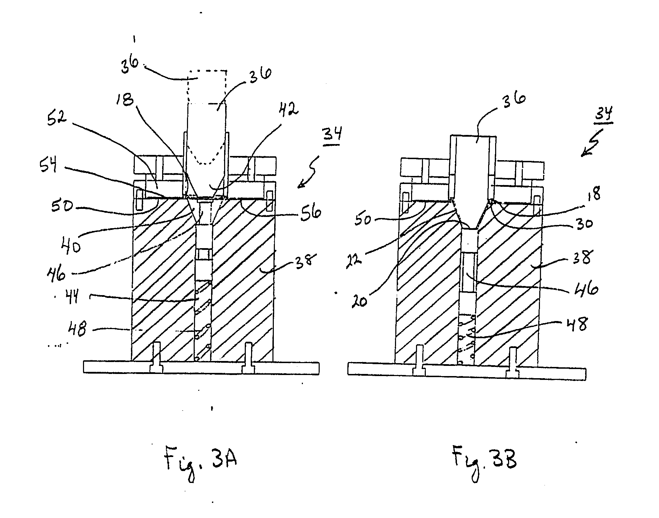

As indicated in Figure 1, and more clearly shown in Figure 2, the substantially rigid base ring 18 is dimensioned for an interference fit with probe 12. With this fit, ring 18 holds cover 10 on probe 12 so that window 20 of the sheath 16 is positioned directly across the opening 26 of probe tip 28. Also, as shown, wall 22 of sheath 16 extends between window 20 and ring 18 to cover a substantial portion of the probe 12. While ring 18 can be effective when made of any non-toxic plastic well known in the pertinent art, sheath 16 must be more specific. As intended for the present invention and indicated above, the entire sheath 16, to include both window 20 and tapered wall 22, is made from a single continuous piece of film. Preferably, this film is a polymer such as polyethylene or polypropylene and is approximately one thousandth of an inch (0.001 in.) thick. Regardless of the particular material used for the manufacture of the film, however, it is important that the film, and consequently sheath 16, be substantially transparent to transmission of infrared energy. Specifically, it is important that window 20 be infrared transparent. Further, in order to obtain consistent results and minimize any attenuation of the infrared emission which will pass through the window 20, window 20 should preferably be as flat and winkle-free as possible.

Still referring to Figure 2, it will be seen that the periphery 24 of sheath 16 is formed as a flange 30 which is attached to the base ring 18. As will be appreciated by the skilled artisan, flange 30 at the periphery 24 of sheath 16 can be attached to ring 18 in a number of ways, such as by solvent bonding or ultrasonic welding.

With cover 10 positioned on probe 12 of thermometer 14 as shown in both Figure 1 and Figure 2, it will be appreciated that sheath 16 serves as a sanitary barrier. Specifically, sheath 16 acts as a barrier which protects a patient from direct contact with probe 12 and probe tip 28 when these parts of thermometer 14 come into physical contact with the patient (not shown). Although sheath 16 is an effective sanitary barrier, because window 20 is infrared transparent, infrared emissions from inside the patient's ear canal can still pass along a path through window 20 of sheath 16 and on through channel 32 of probe 12 for detection and display by thermometer 14.

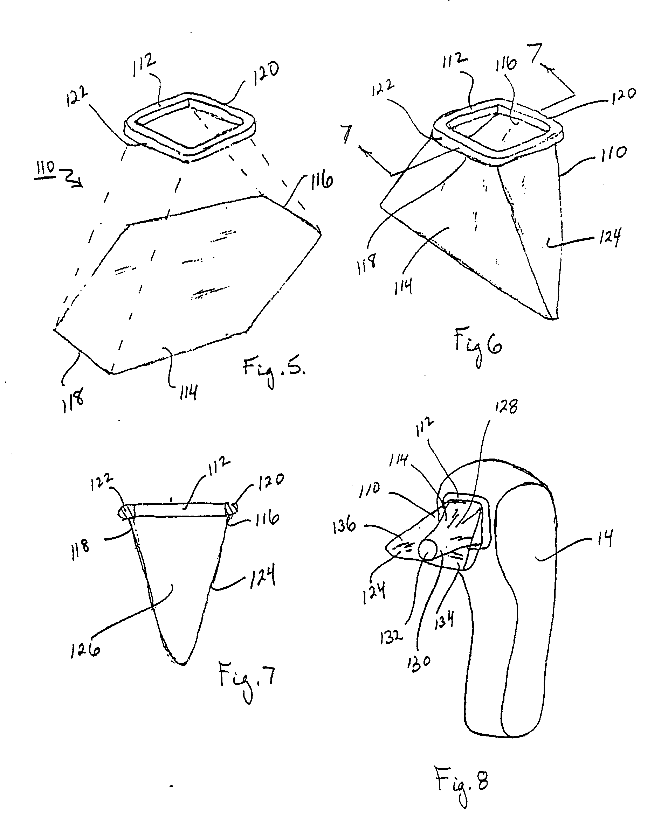

The manufacture of cover 10 will be best appreciated by reference to Figures 3A and 3B. Referring first to Figure 3A, it can be seen that a forming fixture, generally designated 34, has a forming punch 36 and a forming member 38. As shown, member 38 is formed with a frusto-conical-shaped cavity 40 which is dimensioned to matingly receive the frusto-conical-shaped nose 42 of forming punch 36. Member 38 is also formed with a guide channel 44 in which a seat 46 is reciprocally diposed. A biasing means such as spring 48 is also positioned in the guide channel 44 to urge seat 46 into the position substantially as shown in Figure 3A. When seat 46 is in this position shown in Figure 3A, forming punch 36 is either in its withdrawn position, as shown, or in a disengaged position as indicated by forming punch 36' (shown in phantom in Figure 3A). Member 38 also establishes a surface 50 which surrounds the cavity 40 and which is specifically textured for purposes to be subsequently disclosed.

A holding ring 52 is positioned above the surface 50 to create a gap 54 between surface 50 and ring 52 in which a thin infrared transparent polyethylene film 56 can be held. With the film located in this gap 54, forming punch 36 and seat 46 are able to grip a portion of film 56 from its opposite sides.

In the operation of forming fixture 34, a film 56 is positioned in the gap 54 between holding ring 52 and the surface 50 of forming member 38 while forming punch 36' is in its disengaged position. Within the gap 54, film 56 extends across and beyond the opening of frusto-conical-shaped cavity 40. As so positioned, film 56 is gripped between seat 46 and the forming punch 36 substantially as shown in Figure 3A. A portion of film 56 is then die cut, by blades on holding ring 52 (not shown), into a circle which is centered on cavity 40.

Movement of forming punch 36 from its withdrawn position (shown in Figure 3A) to its inserted position (shown in Figure 3B) draws the circular die cut portion of film 56 into cavity 40 to form sheath 16. Specifically, as forming punch 36 is inserted into cavity 40, window 20 is formed and held flat by the gripping action of spring-loaded seat 46 against nose 42 of punch 36. Further, as forming punch 36 is inserted into the cavity 40, textured surface 50 provides a resistive force on film 56 which helps to uniformly guide the film 56 into the cavity between the wall of cavity 40 and nose 42 of forming punch 36. As will be appreciated by the skilled artisan, surface 50 may be serrated or otherwise configured to accomplish the same result achieved by a textured surface. Also, it happens that as film 56 is drawn into cavity 40, the portion of film 56 which is wedged between nose 42 and the sides of cavity 40 is pleated to form the wall 22 of sheath 16. When forming punch 36 is completely advanced to its inserted position, a small portion of the die cut piece of film 56 remains extending out of the cavity 40 to form flange 30 at the periphery 24 of sheath 16. Ring 18 is then attached to this flange 30. Though not shown in Figure 3B, it will be appreciated by the skilled artisan that the bushing 58 which surrounds forming punch 36 and which makes direct contact with ring when punch 36 is in its inserted position, may be vibrated by a generator (not shown) to cause ultrasonic welding of the ring 18 to the flange 30 of sheath 16. As indicated above, other well known procedures can be used to attach ring 18 to flange 30.

Figure 4 shows a possible method for the storage of probe covers 10 which may be effectively employed. Specifically, due to the dimensions and flexibility of sheaths 16, the probe covers 10 can be nested, as shown, for space saving considerations.

Figure 5 shows an exploded view of an alternate embodiment of the probe cover for the present invention generally designated 110. As shown, cover 110 comprises a substantially rectangular (e.g. square) base member 112 and an elongated flexible film strip 114. Similar to film 56 for the preferred embodiment, film strip 114 is a flexible polymer film which is substantially transparent to infrared emission and is on the order of approximately one thousandth of an inch thick (0.001 in). Like base ring 18 for the preferred embodiment, base member 112 is preferably made of a rigid plastic.

Film strip 114 can be of any desired shape, and is shown in Figure 5 to be generally hexagonal only for purposes of discussion. As so shown, film strip 114 is formed with a pair of substantially parallel edges 116 and 118 and, as indicated in Figure 5 and shown in Figure 6, these edges 116 and 118 are respectively attached to the oppositely disposed sides 120 and 122 of base member 112.

As best seen in Figure 6, when film strip 114 is attached to base member 112, the strip 114 is folded and hangs as a sling 124. By cross referencing Figures 6 and 7, it will be seen that sling 124 defines an opening 126 which extends between sling 124 and base member 112 in a direction generally parallel to the sides 120 and 122.

Figure 8 shows that cover 110 is engageable with the probe 128 of thermometer 14. Specifically, probe 128 is formed with a generally rectangular portion that is engageable with base member 112. When base member 112 is so engaged, film strip 114 is stretched over the probe tip 130 of probe 128 to create an IR transparent window 132. This positioning also creates the flaps 134 and 136 of film strip 114 which extend laterally from window 132. It will be appreciated by the skilled artisan that when cover 110 is positioned On probe 128, the film strip 114 establishes a protective covering between probe 128 and the part of the body which comes into contact with probe 128. Further, when probe 128 is inserted into the external ear canal of a patient (not shown), the flaps 134 and 136 fold onto probe 128 to establish a sanitary barrier between probe 128 and the patient's ear canal.

While the particular specula covers as herein shown and disclosed in detail are fully capable of obtaining the objects and providing the advantages herein before stated, it is to be understood that they are merely illustrative of the presently preferred embodiments of the invention and that no limitations are intended to the details of construction or design herein shown other than as defined in the appended claims.

## Claims

1. A cover for the probe and probe tip of an infrared thermometer, said cover comprising a base engageable with said probe and a sheath attached to said base and adapted to cover at least a portion of said probe wherein said sheath defines a substantially infrared transparent window arranged to be held over said probe tip when said base is engaged with said probe.

2. A cover according to Claim 1 wherein said sheath comprises:
an infrared transparent film formed with an open end connected to said window, said open end attached to said base for holding said window over said probe tip when said base is engaged with said probe.

3. A cover according to Claim 2 wherein said open end is formed with a peripheral flange and said cover further comprising a wall interconnecting said window with said flange.

4. A cover according to Claim 3 wherein said wall is pleated.

5. A cover according to Claim 3 or 4 wherein said flange is ultrasonically welded to said surface of said base.

6. A cover according to Claim 2,3,4 or 5 wherein said sheath is frustum-shaped.

7. A cover according to any of Claims 2 to 6 wherein said window is substantially flat and circular-shaped.

8. A cover according to any of Claims 2 to 7 wherein said base is attachable to said thermometer to position said window in the path of the infrared energy received by said thermometer.

9. A cover according to any of Claims 2 to 8 wherein said base is ring shaped and made of a substantially rigid plastic.

10. A cover according to Claim 1 wherein said sheath comprises:
an elongated infrared transparent film having substantially parallel edges, said edges being attached to said base to form a sling for creating said window over said probe tip when said base is engaged with said probe.

11. A cover according to Claim 10 wherein said base is rectangular-shaped and is made of a substantially rigid plastic and said edges are ultrasonically welded to said base.

12. A cover according to any of Claims 2 to 11 wherein said film is thin and is made of a polymer material.

13. A cover according to any of Claims 2 to 12 wherein said film is approximately one thousandth of an inch (0.001 in.) thick.

14. A method for manufacturing a probe cover for an infrared thermometer which comprises the steps of:
centering a thin infrared transparent film over the opening of a frustum-shaped cavity;
gripping a central circular portion of said film between a forming punch and a spring-loaded seat to establish a window therebetween;
pushing said punch into said cavity against the action of said seat to conform said film with said cavity and establish a sheath having a wall integral with said window and extending therefrom; and
attaching a base to the periphery of said sheath with said base being substantially parallel to said window.

15. A method according to Claim 14 wherein said forming punch is dimensioned for mating insertion into said cavity.

16. A method according to Claim 14 or 15 wherein said base is attachable to said probe of said thermometer to position said window in the path of the infrared emissions received by said thermometer.

17. A method according to Claim 14, 15 or 16 wherein said periphery of said sheath is sonically welded to said base.

18. A method according to any of Claims 14 to 17 wherein said film is approximately one thousandth of an inch (0.001 in.) thick.

19. A method according to any of claims 1,4,6 and 18 wherein said base is ring-shaped and is made of a substantially rigid plastic.

Fig. 1

Fig. 2

Fig. 4

Fig. 3A

Fig. 3B

Fig. 5.

Fig 6

Fig. 7

Fig. 8

European Patent Office

# EUROPEAN SEARCH REPORT

Application Number

## DOCUMENTS CONSIDERED TO BE RELEVANT

EP 90309837.4

| Category | Citation of document with indication, where appropriate, of relevant passages | Relevant to claim | CLASSIFICATION OF THE APPLICATION (Int. Cl.5) |
|---|---|---|---|
| X | US - A - 4 854 730 (FRADEN) * Column 6, lines 45-66; fig. 13 * | 1-3, 6-9, 12,13 | G 01 J 5/04 A 61 B 1/22 |
| A | US - A - 4 784 149 (BERMAN et al.) * Column 3, line 29 - column 4, line 8; fig. 2,2A,5 * | 1,2, 12,13 | |
| A | US - A - 4 159 766 (KLUGE) * Column 4, lines 24-59; fig. 7-11 * | 1,2, 12,13 | |
| D,A | US - A - 4 662 360 (O'HARA et al.) * Column 3, line 65 - column 5, line 41; column 6, line - column 7, line 27; fig. 1-7 * | 1,2, 12,13 15 | |
| D,A | US - A - 3 949 740 (TWENTIER) ---- | | |

TECHNICAL FIELDS SEARCHED (Int. Cl.5)

A 61 B 1/00
A 61 B 5/00
G 01 J 5/00
G 01 K 7/00

The present search report has been drawn up for all claims

| Place of search | Date of completion of the search | Examiner |
|---|---|---|
| VIENNA | 10-12-1990 | BAUER |